# FASCICULE DE BREVET EUROPEEN

(11) **EP 3 108 522 B1**
(45) Date de publication et mention de la délivrance du brevet: **23.04.2025**
(21) Numéro de dépôt: 14713881.2
(22) Date de dépôt: 19.02.2014
(51) Int. Cl.: H01M 4/04, H01M 4/13, H01M 4/139, H01M 4/62, H01M 10/0525, H01M 10/054, H01M 4/02

(54) **PROCÉDÉ DE PRÉPARATION D'UNE COMPOSITION D'ÉLECTRODE OU A PROPRIÉTÉS MAGNÉTIQUES, MÉLANGE ET COMPOSITION OBTENUS PAR CE PROCÉDÉ ET CETTE ÉLECTRODE.**
VERFAHREN ZUR HERSTELLUNG EINER ELEKTRODE ODER ZUSAMMENSETZUNG MIT MAGNETISCHEN EIGENSCHAFTEN UND DURCH BESAGTES VERFAHREN HERGESTELLTE MISCHUNG SOWIE BESAGTE ELEKTRODE
METHOD FOR PREPARING AN ELECTRODE COMPOSITION OR A COMPOSITION HAVING MAGNETIC PROPERTIES, MIXTURE AND COMPOSITION OBTAINED BY SAID METHOD, AND SAID ELECTRODE

(43) Date de publication de la demande: 28.12.2016
(73) Titulaire: Hutchinson, 75008 Paris (FR)
(72) Inventeur: SONNTAG, Philippe, F-77210 Avon (FR); AYME-PERROT, David, F-68330 Huningue (FR); DUFOUR, Bruno, F-77430 Champagne Sur Seine (FR); PREBE, Arnaud, H1A 2B6 Montreal, QC (CA); GAROIS, Nicolas, F-45200 Amilly (FR)
(74) Mandataire: Plasseraud IP
(86) Numéro de dépôt international: PCT/FR2014/050345
(87) Numéro de publication internationale: WO 2015/124835

(56) Documents cités:
- US-A1- 2008 226 984
- US-A1- 2009 053 607
- US-B1- 7 820 328

## Description

La présente invention concerne un procédé de préparation d'une composition polymérique en particulier utilisable pour constituer une électrode de batterie lithium-ion, sodium-ion ou de supercondensateur ou pour présenter des propriétés magnétiques, une telle composition obtenue par ce procédé, un mélange précurseur de cette composition obtenu par une première étape de mélangeage de ce procédé, et cette électrode de batterie lithium-ion ou de supercondensateur. L'invention s'applique à toutes compositions polymériques comprenant un taux très élevé de charge (avantageusement supérieur à 80 % en masse ou 60 % en volume) et une porosité contrôlée en fonction de l'application choisie, la charge étant par exemple une matière inorganique active pour électrode de batterie lithium-ion ou sodium-ion, du carbone poreux pour électrode de supercondensateur ou une charge inorganique magnétique.

Plusieurs procédés permettant la fabrication de matériaux à hauts taux de charges ont déjà été décrits dans la littérature.

Par exemple, en ce qui concerne les charges magnétiques, on utilise généralement un procédé avec solvant pour mélanger les différents composés (e.g. charge magnétique, agent de surface, compatibilisant, liant) afin d'obtenir une dispersion ou boue (« slurry » en anglais) qui, une fois séchée, permet l'obtention du matériau magnétique, comme par exemple décrit dans le document US-A1-2011/0018664. Après enduction de cette dispersion, on applique un champ magnétique pour orienter les charges magnétiques, on sèche le film enduit obtenu, puis on le découpe selon la forme souhaitée et l'on réalise enfin un frittage pour obtenir le matériau final. Pour ces applications magnétiques, on recherche plutôt un matériau dense afin d'avoir le champ magnétique correspondant le plus élevé possible.

On retrouve le même type de procédé dans le domaine des batteries, où les électrodes sont le plus souvent obtenues par une méthode avec solvant organique ou aqueux comportant une étape de dissolution ou de dispersion des différents composés de l'électrode incluant un liant polymérique dans le solvant, suivie d'une étape d'étalement sur un collecteur métallique et enfin d'une étape d'évaporation du solvant. Cette méthode, par exemple décrite dans le document US-B2-7 235 332 avec un solvant organique, permet l'obtention d'une porosité élevée dans le matériau, due à l'espace occupé par le solvant. Cette porosité est nécessaire pour l'imprégnation de l'électrode par un électrolyte, qui permet d'en assurer le fonctionnement.

Ces procédés d'enduction connus comportent de nombreux inconvénients sur le plan environnemental et de la sécurité lorsque des solvants organiques, potentiellement toxiques ou inflammables, sont employés. En effet, il est nécessaire d'évaporer des quantités importantes de ces solvants. Dans le cas de l'utilisation de solvant aqueux, les procédés connus par enduction doivent inclure un séchage très poussé de l'électrode, avant utilisation de celle-ci au sein d'une cellule de batterie lithium-ion.

De plus, il est difficile de contrôler la porosité du matériau enduit par évaporation de solvant et, d'une manière générale, le solvant limite les possibilités de formulation et d'ajout d'additifs dans la composition, notamment du fait de sa migration lors du séchage et des masses molaires élevées qui sont difficiles à solvater, comme dans le domaine des peintures.

Il est donc hautement désirable de mettre en oeuvre un procédé évitant l'utilisation de solvant et permettant de contrôler la porosité de la composition obtenue.

Un autre procédé connu, essentiellement pour l'incorporation de hauts taux de charges magnétiques à des matériaux, consiste à réaliser une injection dans un moule d'une pâte comprenant la charge et un précurseur de résine thermodurcissable, comme par exemple décrit dans le document US-A1-2006/0280921, puis une cuisson de la pâte. Les matériaux magnétiques obtenus présentent un taux élevé de charges magnétiques liées par un réseau tridimensionnel. Néanmoins, ces matériaux une fois réticulés ne sont plus transformables et présentent l'inconvénient de requérir généralement des temps longs de procédé dus à la réaction des résines. De plus, ce type de procédé est fortement dépendant de l'écoulement des précurseurs thermodurcissables au travers de la porosité inter-grains (loi de Darcy) et donc de la viscosité de ces précurseurs. Ici aussi, on ne peut pas utiliser des masses molaires élevées pour des raisons de viscosités excessives, ni des formulations complexes étant donné les phénomènes de filtration des additifs induits par les charges. Ce procédé d'injection présente en outre un problème d'étanchéité des moules dès lors que l'on opère à des pressions élevées. Enfin, il est impossible avec ce procédé de contrôler la porosité et donc la densité du matériau final.

Il est enfin connu d'utiliser des procédés continus tels que ceux généralement utilisés pour les thermoplastiques (e.g. extrusion, mélangeur, presse à injection) permettant la mise en oeuvre rapide en voie fondue des matériaux. Toutefois, les taux de charges atteints à ce jour varient selon les charges minérales considérées. En effet, ces procédés mélangeant par voie fondue les charges et les dispersant dans un liant génèrent de hautes viscosités et une abrasion du liant par les charges minérales qui sont présentes en quantité élevée. De plus, il est encore impossible de contrôler la densité des matériaux obtenus. En effet, on ne peut obtenir que des matériaux denses intrinsèques à la voie fondue, sans contrôle de porosité.

Concernant l'incorporation de charges magnétiques, on peut citer le document US-A1-2011/017939 qui décrit l'obtention de matériaux par voie fondue avec un liant élastomère où seulement un taux massique en charge magnétique de 88 % est obtenu dans le meilleur des cas. Pour pouvoir atteindre des taux massiques de charge supérieurs à 90 % en utilisant un tel procédé, il est généralement nécessaire de fonctionnaliser la charge pour améliorer sa compatibilité avec le liant, via un agent de couplage modifiant la surface de cette charge avant mélangeage avec le liant. Cependant, cette fonctionnalisation de la charge augmente considérablement le coût global et la complexité du procédé. De plus, aucun contrôle de la porosité et donc de la densité n'est possible par ces procédés connus par voie fondue. Le document US-A1-2011/074531 décrit par exemple l'obtention par voie fondue de matériaux contenant un taux volumique en charge magnétique supérieur à 80 %, via la fonctionnalisation de la surface de la charge par un oligomère époxy, l'utilisation d'une chaîne polymérique de faible masse molaire (4 à 12 kmol/g) contenant un hydrogène labile amine permettant la réticulation avec la fonction époxy, et l'ajout d'un additif du type pentaerythritol et d'un acide gras.

Un inconvénient majeur de ces procédés d'incorporation par voie fondue de taux élevés de charges magnétiques réside dans la nécessité de fonctionnaliser la surface de la charge et d'employer un liant de faible masse molaire, typiquement inférieure à 15 kmol/g, pour éviter les problèmes induits par des masses molaires élevées et sans compatibilisation de la surface de la charge, qui sont notamment une hausse considérable de la viscosité et donc des pressions associées au procédé et une abrasion importante de l'équipement et des matières premières en contact générée par la charge non fonctionnalisée de par sa concentration élevée.

Il est également connu de mettre en oeuvre des procédés en voie fondue pour préparer des électrodes de batteries, avec néanmoins des difficultés majeures rencontrées dans le cas spécifique des batteries lithium-ion, du fait que les taux massiques de matière active requis pour une capacité suffisante de l'électrode de la batterie lithium-ion doivent être égaux ou supérieurs à 85 %. Or, à de tels taux de matière active, la viscosité du mélange polymérique devient très élevée et entraîne des risques de sur-échauffement du mélange et de perte de cohésion mécanique après sa mise en œuvre.

Rappelons que les batteries lithium-ion sont constituées d'au moins deux électrodes faradiques conductrices de polarités différentes, l'anode (généralement en graphite) et la cathode (généralement en un oxyde d'un métal de transition), électrodes entre lesquelles se trouve un séparateur constitué d'un isolant électrique imbibé d'un électrolyte aprotique à base de cations Li+ assurant la conductivité ionique. La matière active d'une électrode de batterie lithium-ion permet une insertion/désinsertion réversible de lithium au sein de l'électrode, et plus la fraction massique de cette matière active y est élevée, plus la capacité de l'électrode est grande. L'électrode doit également contenir un composé conducteur électrique, tel que du noir de carbone et, pour lui conférer une cohésion mécanique suffisante, un liant polymérique. Une batterie lithium-ion est ainsi basée sur l'échange réversible de l'ion lithium entre l'anode et la cathode lors de la charge et la décharge de la batterie, et elle possède une haute densité d'énergie pour une masse très faible grâce aux propriétés physiques du lithium.

A titre d'exemples de procédés de préparation par voie fondue d'électrodes spécifiquement de batterie lithium-ion, on peut citer en particulier les deux documents US-A1-2013/0183577 et US-A1-2013/0244098 tous deux au nom de la Demanderesse qui présentent respectivement des compositions de cathode et d'anode pour cette batterie. Ces compositions sont chacune caractérisées par la présence d'un liant élastomère réticulé et d'un composé organique non volatil utilisable dans le solvant d'électrolyte. Ce composé organique est présent dans la composition selon une fraction massique réduite (typiquement inférieure à 5 %) et peut être un carbonate d'au moins une oléfine, e.g. un carbonate d'éthylène.

Néanmoins, les procédés présentés dans ces deux derniers documents ne permettent pas de contrôler la porosité de l'électrode obtenue.

Le document US-B1-7 820 328 a tenté d'apporter une solution à ce problème en utilisant, conjointement à un liant polymérique et à une charge de dilution conductrice, une faible fraction massique d'au plus 5 % d'un polymère sacrificiel décomposé thermiquement pour l'obtention d'une électrode incorporant une matière active selon une fraction massique supérieure à 90 %, mais sans exemple de réalisation détaillant le procédé utilisé (lequel peut être indifféremment mis en œuvre avec ou sans solvant).

Un inconvénient majeur du procédé présenté dans ce dernier document réside dans la difficulté de mise en œuvre des électrodes dans le cas où elles seraient obtenues par voie fondue, ainsi que dans leur capacité électrochimique pouvant s'avérer insuffisante dans une batterie lithium-ion.

Un but de la présente invention est donc de concevoir un procédé de fabrication par voie fondue qui remédie à ces inconvénients en permettant notamment un contrôle de la porosité des compositions obtenues selon les applications visées, avec incorporation d'un taux massique très élevé de charges typiquement supérieur à 80 %, sans nécessité de fonctionnalisation de ces charges.

Ce but est atteint en ce que la Demanderesse vient de découvrir d'une manière surprenante que si l'on mélange à chaud par voie fondue et sans évaporation de solvant une matière active et des additifs comprenant un liant polymérique et une phase polymérique sacrificielle continue de sorte que la fraction massique dans le mélange obtenu de cette phase soit égale ou supérieure à 15 %, alors on obtient une composition polymérique utilisable pour constituer une électrode de batterie lithium-ion, sodium-ion ou de supercondensateur ou pour présenter des propriétés magnétiques, avec une plastification et une fluidité améliorées lors de la mise en œuvre du mélange fondu en dépit du taux massique de matière(s) active(s) très élevé dans la composition, et l'obtention d'une porosité contrôlée de la composition en fonction de l'application souhaitée lui conférant selon le cas une capacité d'électrode ou des propriétés de champs magnétiques satisfaisantes.

Un procédé de préparation selon l'invention d'une composition polymérique utilisable pour constituer une électrode de batterie lithium-ion, sodium-ion ou de supercondensateur ou pour présenter des propriétés magnétiques, comprend ainsi les étapes suivantes :
a) mélangeage à chaud par voie fondue et sans solvant d'au moins une matière active, d'une phase polymérique formant liant et d'une phase polymérique sacrificielle pour l'obtention d'un mélange, et
b) élimination au moins partielle de ladite phase polymérique sacrificielle pour l'obtention de ladite composition qui comprend la ou les matière(s) active(s) selon un taux massique supérieur à 80 %,
et ce procédé selon l'invention est tel que ladite phase polymérique sacrificielle est utilisée à l'étape a) selon une fraction massique dans ledit mélange qui est égale ou supérieure à 15 %.

De préférence, ladite phase polymérique sacrificielle est utilisée à l'étape a) selon une fraction massique dans ledit mélange qui est inclusivement comprise entre 20 % et 80 %.

On notera que le procédé de l'invention permet d'incorporer, directement en voie fondue et par les techniques de transformation plastique classiques, de très hauts taux de charges cumulés dans les compositions obtenues, supérieurs à 80 % en masse ou encore à 60 % en volume, qui confèrent une performance élevée aux cellules électrochimiques incorporant des électrodes constituées de ces compositions.

La Demanderesse a ainsi pu produire en voie fondue des matériaux utilisables en l'état selon l'application choisie qui, après mise en forme et retrait de la phase sacrificielle, contiennent ces très hauts taux de charges sans modification préalable de la surface des charges ni utilisation d'un agent de couplage.

On notera également que ce procédé permet de contrôler la porosité au sein de la composition par la quantité de phase sacrificielle introduite en fonction de l'application visée en la maîtrisant en termes de taille, de quantité et de morphologie des pores, voire éventuellement de supprimer cette porosité, en utilisant une phase sacrificielle continue bien choisie dans sa nature au regard de ce procédé en voie fondue et de l'application choisie. Une porosité ouverte de dimensions par exemple inférieures à 20 µm peut être recherchée pour des applications de type électrodes permettant de sorber un électrolyte. Selon le type d'applications, la porosité de la composition peut être contrôlée (compromis densité/ magnétisme), réduite voire éliminée par compression afin d'obtenir un matériau plus dense. En effet selon l'application choisie, on peut soit diminuer la densité pour un champ magnétique équivalent ou augmenter le champ magnétique pour un volume donné en augmentant la densité. Pour l'obtention d'électrodes, on peut également comprimer le matériau pour contrôler sa porosité.

De plus, le mélangeage, la dispersion et la répartition homogène de la phase formant liant, de la phase sacrificielle et de la ou des matière(s) active(s) sont assurées lors du procédé en voie fondue. Une éventuelle réticulation de la phase formant liant est possible pour optimiser les propriétés mécaniques et la cohésion de la composition, mais n'est pas nécessaire si une future transformation est envisagée.

On notera en outre que le procédé selon l'invention procure des temps de mise en œuvre courts, typiques des procédés de plasturgie conventionnels tels que l'extrusion par exemple, et que l'aptitude à la mise en œuvre améliorée des compositions de l'invention est maintenue par la suite tant qu'aucune réticulation n'a été effectuée.

Selon une autre caractéristique de l'invention, ladite phase polymérique sacrificielle peut être utilisée à l'étape a) sous forme de granulés de taille moyenne en nombre supérieure à 1 mm (i.e. pas des nanoparticules), et l'étape a) est mise en œuvre dans un mélangeur interne ou dans une extrudeuse sans macroséparation de phases entre la phase formant liant et la phase polymérique sacrificielle dans ledit mélange, dans lequel la phase formant liant est dispersée de manière homogène dans la phase polymérique sacrificielle qui est continue, ou bien forme une phase co-continue avec cette dernière.

On notera que l'on peut extraire la phase sacrificielle par simple décomposition thermique ou par tout autre procédé permettant son extraction sans impacter le reste du mélange. La phase sacrificielle peut être également directement extraite dès la sortie de la filière par décompression lors de l'utilisation de composés volatils. Il est préférable d'utiliser comme matière sacrificielle un ou des polymère(s) ne laissant peu ou pas de résidus lors de sa (leur) décomposition. Toutefois, si un tel polymère compatible avec l'application finale est choisi comme phase sacrificielle, on peut en variante contrôler son extraction et laisser une partie de la phase sacrificielle dans la composition obtenue.

Selon un mode de réalisation de l'invention, ladite phase polymérique sacrificielle est éliminée sensiblement sans résidu ou non à l'étape b) via une décomposition par voie thermique, la phase sacrificielle présentant une température de décomposition thermique inférieure d'au moins 20° C à une température de décomposition thermique de la phase formant liant. Dans ce cas, cette phase sacrificielle est de préférence à base d'au moins un polymère sacrificiel choisi parmi les polyalcènes carbonates, de préférence les polyéthylènes carbonates et/ou les polypropylènes carbonates (sont néanmoins également utilisables d'autres polymères connus pour avoir une température franche de dégradation thermique).

Selon un autre mode de réalisation de l'invention, ladite phase polymérique sacrificielle est éliminée sensiblement sans résidu ou non à l'étape b) via une extraction par un solvant et est à base d'au moins un polymère sacrificiel extractible par voie liquide et de préférence choisi dans le groupe constitué par les polyéthylène glycols, les polypropylène glycols et leurs mélanges (à noter que sont également utilisables d'autres bases de polymères extractible par voie liquide, base aqueuse ou organique).

On notera qu'afin de pouvoir contrôler la mise en œuvre, l'intégrité de la composition finale et sa porosité, il est nécessaire de choisir avec soin le couple polymère(s) formant liant - polymère(s) sacrificiel(s) et de procéder au mélangeage en choisissant en connaissance de cause les outils utilisés (e.g. profil de vis dans le cas d'une extrusion), les proportions d'additifs, les éventuels compatilibisants, etc. En effet, il est nécessaire comme expliqué ci-dessus d'éviter une macroséparation de phases lors de la mise en oeuvre entre la phase formant liant et la phase sacrificielle (phase pure de polymère(s) non dispersé(s) supérieure à quelques dizaines de µm).

On notera également qu'il est possible d'utiliser des générateurs photoacides comme additifs d'aide à la décomposition des phases sacrificielles, e.g. pour le polypropylène carbonate (on pourra se référer à l'article de Cupta M., Jayachandran P., Khol P., Photoacid generators for catalytic decomposition of polycarbonate, Journal of Applied Polymer Science, 2007, Vol. 105, pp. 2655-2662). L'utilisation de ces photoacides permet de diminuer les températures de dégradation après mise en œuvre de la cathode, en particulier. Ils sont donc utiles sans être nécessaires à l'invention.

A titre de matière(s) active(s) utilisable(s) dans le procédé de l'invention et présente(s) dans la composition obtenue à l'étape b) selon une fraction massique de préférence à égale ou supérieure à 85 %, on peut utiliser en fonction de l'application recherchée une charge choisie dans le groupe constitué par :
- toutes charges inorganiques magnétiques connues de l'homme de l'art, telles que des ferrites Fe₂O₃ et les matières magnétiques du type Nd-Fe-B, Sm-Fe-N ou sur base de cobalt comme le SmCo, notamment,
- les charges inorganiques actives aptes à permettre une insertion/ désinsertion de lithium pour les électrodes de batteries lithium-ion, comprenant des composés ou complexes polyanioniques lithiés tels qu'un phosphate d'un métal M lithié de formule LiMPO₄ revêtu de carbone (e.g. C-LiFePO₄), un oxyde de titane lithié de formule Li₄Ti₅O₁₂, ou toute autre matière active connue de l'homme du métier pour des cathodes (e.g. LiCoO₂, LiMnO₄, LiNi_{1/3}Mn_{1/3}Co_{1/3}O₄) ou des anodes (e.g. graphite), et
- les charges comprenant du carbone poreux pour les électrodes de supercondensateurs.

Des charges minérales électroconductrices peuvent être ajoutées conjointement à d'autres, par exemple dans le cadre des électrodes pour batteries lithium-ion, sodium-ion ou pour supercondensateurs, mais également seules dans le cadre d'applications très conductrices, pour des conductivités supérieures au S/cm. On peut citer par exemple le noir de carbone conducteur, mais également le graphite, le graphène, les nanofibres de carbone, les nanotubes de carbones et un mélange de ceux-ci.

A titre de polymère(s) formant liant assurant la cohésion de la composition après mise en oeuvre, on peut utiliser toutes les bases de polymères sous réserve de leur aptitude à être mis en oeuvre par voie fondue et, comme mentionné précédemment, de leur possible compatibilisation avec la phase sacrificielle choisie. On peut par exemple citer les polyoléfines, les polymères halogénés, les polymères acryliques, acrylates, méthacrylates, vinyl acétates, les polyéthers, polyesters, polyamides, les polymères aromatiques et les élastomères.

Selon l'invention, ladite phase formant liant comprend au moins un élastomère réticulé ou non, qui est utilisé dans ledit mélange selon une fraction massique comprise entre 1 % et 12 % et qui est choisi dans le groupe constitué par les copolymères de butadiène et d'acrylonitrile hydrogénés (HNBR), les copolymères d'éthylène et d'un acrylate, les polyisoprènes et leurs mélanges. Il est toutefois préférable d'utiliser un liant assurant une continuité des propriétés élastiques sur une plage de température allant sensiblement de -20° C à 80° C, d'où l'utilisation préférentielle d'élastomères tels que les HNBR ou les copolymères d'éthylène et d'acrylate, notamment.

Il est possible d'ajouter aux compositions de l'invention des additifs spécifiques afin d'améliorer ou d'optimiser leur procédé de fabrication. On peut également ajouter des composés permettant la réticulation du liant ainsi que des coagents capables d'aider à la réticulation et à l'homogénéisation de celle-ci. On peut par exemple citer les peroxydes organiques à titre d'agent de réticulation et le triallyl cyanurate comme coagent. On peut également se servir de tous composés permettant la réticulation du liant comme des photo-amorceurs ou des composés soufrés (typiques de la réticulation des caoutchoucs par vulcanisation). On peut utiliser en variante des réactions chimiques de composés bi-fonctionnels sur les chaînes pendantes du liant comme les fonctions anhydrides maléiques, époxydes, acides, alcools, amines, amides ou esters, dès lors qu'une réaction sur les fonctions pendantes entraîne la formation de ponts entre chaînes du polymère et, par conséquent, une réticulation du liant. La réticulation permet d'assurer la cohésion de la composition en fonction de la nature du liant. Comme indiqué ci-dessus, on notera que l'utilisation d'un agent et d'un coagent de réticulation est utile mais pas nécessaire à l'invention, et dépend directement de l'application visée et de la nécessité de conserver une aptitude à la mise en oeuvre pour la composition (cas où elle n'est pas réticulée) ou de ne pas la conserver (cas d'une composition réticulée).

Avantageusement, ladite composition obtenue à l'étape b) peut présenter une porosité volumique comprise entre 30 % et 70 % et est adaptée pour constituer une électrode de batterie lithium-ion, sodium-ion ou de supercondensateur.

Selon une autre caractéristique de l'invention, le procédé peut comprendre entre les étapes a) et b) une étape de façonnage par calandrage dudit mélange obtenu à l'étape a), et ladite composition obtenue à l'étape b) est formée d'une feuille d'épaisseur comprise entre 50 µm et 150 µm.

Selon un autre aspect de l'invention concernant le cas où l'élimination de ladite phase polymérique sacrificielle n'est que partielle, une composition polymérique selon l'invention qui est utilisable pour constituer une électrode de batterie lithium-ion, sodium-ion ou de supercondensateur ou pour présenter des propriétés magnétiques, est telle que la composition est obtenue par ledit procédé de l'invention tel que défini ci-dessus et peut présenter ladite phase sacrificielle selon une fraction massique égale ou supérieure à 0,001 % et par exemple comprise entre 0,01 % et 10 %.

Selon encore un autre aspect de l'invention, un mélange polymérique selon l'invention qui est utilisable pour constituer un précurseur de cette composition (e.g. un précurseur d'électrode) est tel que ce mélange est obtenu par l'étape a) dudit procédé de l'invention et comprend ladite phase polymérique sacrificielle selon une fraction massique dans ce mélange égale ou supérieure à 15 % et de préférence inclusivement comprise entre 20 % et 80 %.

Comme indiqué ci-dessus, ce mélange de l'invention est en outre tel que ladite phase formant liant est dispersée de manière homogène dans ladite phase polymérique sacrificielle qui est continue, ou bien forme une phase co-continue avec cette dernière.

Une électrode de batterie lithium-ion, sodium-ion ou de supercondensateur selon l'invention (e.g. une cathode ou une anode) est telle qu'elle comprend une composition polymérique selon l'invention telle que définie ci-dessus.

Avantageusement, cette électrode peut être telle que ladite composition comprend en outre une charge électriquement conductrice choisie dans le groupe constitué par le noir de carbone, le graphite, le graphite expansé, les fibres de carbones, les nanotubes de carbone, le graphène et leurs mélanges, ladite charge électriquement conductrice étant présente dans la composition selon une fraction massique comprise entre 1 % et 10 %.

Il convient de noter que l'invention exposée dans la présente description peut être appliquée à d'autres domaines que ceux précités nécessitant des hauts taux de charges inorganiques (métalliques, magnétiques ou autres) et éventuellement un contrôle de la porosité de la composition obtenue, comme par exemple pour des écrans isolants entre deux diamagnétiques. On peut également, en remplaçant les charges magnétiques par des charges électroconductrices, mettre en oeuvre par voie fondue des matériaux ayant de très hautes conductivités électriques (supérieures au S/cm), poreux ou non selon l'application recherchée. Une porosité contrôlée et finement dispersée permet une isolation thermique ou phonique, tout en ayant un haut taux de charge. On peut ainsi par exemple avantageusement obtenir des effets de conductivités électriques élevées combinés à une isolation thermique dans le cadre de l'effet Seebeck ou Peltier et d'un générateur thermoélectrique.

D'autres caractéristiques, avantages et détails de la présente invention ressortiront à la lecture de la description suivante de plusieurs exemples de réalisation de l'invention, donnés à titre illustratif et non limitatif, en comparaison d'un exemple « témoin » non conforme à l'invention.

Dans le cas d'utilisation de charges minérales pour des applications en stockage d'énergie, on a caractérisé de manière électrochimique les compositions obtenues. Pour cela, on a découpé à l'emporte pièce des disques de 14 mm de diamètre puis on les a placés en boîte a gants sous atmosphère inerte. On a monté dans la boîte à gants des piles boutons avec comme contre-électrode du lithium métal, afin de préparer des demi-piles. L'électrolyte utilisé (fourni par la société Solvionic) était le suivant : LiPF₆ à 1M dans EC/DMC à 1v/1v. On a caractérisé les piles ainsi montées sur banc galvanostatique « Biologic VMP3 » à différentes vitesses de charge et décharge. On a essentiellement réalisé les mesures à C/5.

### Exemple 1 selon l'invention :

On a préparé une composition 1 de matériau magnétique selon les formulations suivantes (exprimées en fractions massiques et volumiques), pour le mélange avant extraction du polymère sacrificiel et pour la composition 1 obtenue après cette extraction.

**Tableau 1 :**

| | Avant extraction | | Après extraction | |
|---|---|---|---|---|
| **Composition 1** | % masse | % volume | % masse | % volume |
| Liant : HNBR (Zetpol 2010L) | 4 | 12,5 | 5 | 22 |
| Matière active : Ferrites (NK-132) | 76 | 44,3 | 95 | 78 |
| Polymère sacrificiel : Polyéthylène carbonate (QPAC25) | 20 | 43,2 | 0 | 0 |

On a préparé la composition 1 en utilisant un mélangeur interne à 60° C. On a d'abord ajouté le HNBR et une partie du polyéthylène carbonate afin d'obtenir un mélange fondu plastifié. Ensuite, on a ajouté progressivement les charges magnétiques avec ajout régulier du polyéthylène carbonate restant, jusqu'à obtention d'un mélange homogène.

On a ensuite calandré le mélange obtenu sous forme de feuille avant de le placer en étuve à 230° C sous air pendant 15 min. On a enfin placé le produit résultant dans une presse à 150° C pour re-densifier le matériau formant cette composition 1.

Lors du traitement thermique, on a mesuré par différence de masse l'élimination du polyéthylène carbonate : on a ainsi décomposé 100 % du polyéthylène carbonate initialement incorporé dans le mélange. Cela conduit à une baisse de densité de la composition 1 de 3 g/cm³ à 2,4 g/cm³. Après re-densification, on a obtenu une densité de 3,7 g/cm³.

Contrairement à l'art antérieur exposé en préambule, on notera que ce procédé de préparation de la composition 1 ne requiert pas la fonctionnalisation de surface des charges magnétiques, qui peuvent être utilisées en l'état pour les champs magnétiques qu'elles génèrent dans le produit final grâce aux quantités élevées de charges (taux massique de 95 %) et à la re-densification du matériau après extraction du polymère sacrificiel.

On notera également que ce procédé permet d'obtenir un champ magnétique intense dans une direction, grâce à la présence d'un taux relativement élevé de phase sacrificielle dans le mélange fondu (taux massique de 20 %) et à la fluidité du mélange. Une fois les charges ajoutées et orientées, cette extraction et re-densification permettent de conserver cette orientation et d'augmenter la densité et donc l'intensité du champ émis.

### Exemple 2 selon l'invention :

On a préparé une composition 2 de cathode pour batterie lithium-ion selon les formulations suivantes, pour le mélange avant extraction du polymère sacrificiel et pour la composition 2 obtenue après l'extraction.

**Tableau 2 :**

| | Avant extraction | | Après extraction | |
|---|---|---|---|---|
| **Composition 2** | % masse | % volume | % masse | % volume |
| Liant : HNBR (Zetpol 2010L) | 4,9 | 10,4 | 7,5 | 20,8 |
| Charge conductrice : Noir de carbone (C-Nergy C65) | 4,9 | 5,3 | 7,5 | 10,6 |
| Polymère sacrificiel : Polyéthylène carbonate (QPAC25) | 34,2 | 50 | 0 | 0 |
| Matière active: C-LiFePO₄ ("Life power P2") | 56 | 34,3 | 85 | 68,6 |

On a préparé la composition 2 en utilisant un mélangeur interne à 70° C. On a d'abord ajouté le HNBR et une partie du polyéthylène carbonate afin d'obtenir un mélange fondu plastifié. Ensuite, on a ajouté progressivement les charges minérales avec ajout régulier du polyéthylène carbonate restant, jusqu'à obtention d'un mélange homogène.

On a ensuite calandré le mélange obtenu sous forme de feuille afin de le comprimer sous presse à 170° C pendant 15 min. On a enfin mis en œuvre une étape de décomposition du polymère sacrificiel en étuve sous air à 230° C pendant 15 min. Lors du traitement thermique, on a mesuré par différence de masse l'élimination du polyéthylène carbonate : on a ainsi décomposé 100 % du polyéthylène carbonate initialement incorporé dans le mélange. Cela a conduit à une baisse de densité de l'électrode de 2,0 g/cm³ à 1,3 g/cm³ et à une porosité volumique de 50 %.

On notera que la composition 2 résultante, qui est issue d'un mélange fondu comprenant plus de 30 % en masse de phase sacrificielle et qui comprend 85 % en masse de matière active, peut être utilisable directement comme cathode. En effet, on a caractérisé cette composition 2 en pile bouton contre Li métal. En fixant un courant équivalent à une vitesse de charge et décharge de C/5, on a obtenu une capacité maximum en décharge atteinte de 115 mAh par gramme de cathode (sans inclure la masse du collecteur de courant), ce qui correspond à une capacité de 135 mAh par gramme de C-LiFePO₄.

### Exemple 3 selon l'invention :

On a préparé une composition 3 de cathode pour batterie lithium-ion selon les formulations suivantes (exprimées en fractions massiques et volumiques), pour le mélange avant extraction du polymère sacrificiel et pour la composition 3 obtenue après cette extraction.

**Tableau 3 :**

| | Avant extraction | | Après extraction | |
|---|---|---|---|---|
| **Composition 3** | % masse | % volume | % masse | % volume |
| Liant : HNBR (Zetpol 2010L) | 5,7 | 12,5 | 7,5 | 20,8 |
| Charge conductrice : Noir de carbone (C-Nergie C65) | 5,7 | 6,4 | 7,5 | 10,6 |
| Polymère sacrificiel : Polypropylène carbonate (basse masse molaire) | 11,9 | 20 | 0 | 0 |
| Polymère sacrificiel : Polypropylène carbonate (haute masse molaire) | 11,9 | 20 | 0 | 0 |
| Matière active: C-LiFePO₄ ("Life Power P2") | 64,8 | 41,1 | 85 | 68,6 |

On a préparé la composition 3 en utilisant un mélangeur interne à 80° C. On a d'abord ajouté le HNBR et le polypropylène carbonate de haute masse molaire afin d'obtenir un mélange fondu plastifié. Ensuite, on a ajouté progressivement les charges minérales avec ajout régulier du polypropylène carbonate de basse masse molaire (un préchauffage à environ 60° C de la matière peut être nécessaire afin d'en diminuer la viscosité et de faciliter l'ajout), jusqu'à obtention d'un mélange homogène.

On a ensuite calandré le mélange obtenu sous forme de feuille afin de le comprimer sous presse à 170° C pendant 15 min. Enfin, on a mis en œuvre une étape de décomposition du polymère sacrificiel en étuve sous air à 230° C pendant 45 min. Lors du traitement thermique, on a mesuré par différence de masse l'élimination des polypropylène carbonates : on a ainsi décomposé 100 % des polypropylène carbonates initialement incorporés dans le mélange. Cela a conduit à une baisse de densité de l'électrode de 2,1 g/cm³ à 1,6 g/cm³ et à une porosité volumique de 40 %.

On notera que la composition 3 résultante, qui est issue d'un mélange fondu comprenant plus de 20 % en masse de phase sacrificielle et qui comprend 85 % en masse de matière active, peut être utilisable directement comme cathode. En effet, on l'a caractérisée en pile bouton contre Li métal. En fixant un courant équivalent à une vitesse de charge et décharge de C/5, on a obtenu une capacité maximum en décharge atteinte de 123 mAh par gramme de cathode (sans inclure la masse du collecteur de courant), ce qui correspond à une capacité de 145 mAh par gramme de C-LiFePO₄.

### Exemple 4 selon l'invention :

On a préparé une composition 4 de cathode pour batterie lithium-ion selon les formulations suivantes (exprimées en fractions massiques et volumiques), pour le mélange avant extraction du polymère sacrificiel et pour la composition 4 obtenue après cette extraction.

**Tableau 4 :**

| | Avant extraction | | Après extraction | |
|---|---|---|---|---|
| **Composition 4** | % masse | % volume | % masse | % volume |
| Liant : Ethylène-Acrylate d'éthyle (Lotader 5500) | 3,4 | 7,6 | 5 | 15,3 |
| Charge conductrice : Noir de carbone (C-Nergie C65) | 3,4 | 3,7 | 5 | 7,5 |
| Polymère sacrificiel : Polypropylène carbonate (QPAC40) | 30,9 | 50,4 | 0 | 0 |
| Matière active: C-LiFePO4 ("Life Power P2") | 62,3 | 38,3 | 90 | 77,2 |

On a préparé la composition 4 en utilisant une extrudeuse bi-vis équipée de trois doseurs gravimétriques, d'un gaveur latéral, d'une pompe à engrenage et d'une filière plate. On a réparti les différentes matières premières dans ces différents doseurs gravimétriques. Lors de l'extrusion, on a réglé les débits des doseurs de manière à obtenir la composition 4 voulue. En utilisant un profil de vis spécifique, on a dispersé et homogénéisé par voie fondue les matières premières dans l'extrudeuse bi-vis. La pompe à engrenage et la filière plate en bout d'extrudeuse ont servi à mettre en forme le mélange obtenu sous forme de film directement déposé sur un collecteur de courant. On a ensuite traité thermiquement le film ainsi obtenu à 230° C pendant 60 min. sous air, afin d'obtenir la composition 4 finale.

Lors du traitement thermique, on a mesuré par différence de masse l'élimination du polypropylène carbonate : on a ainsi décomposé 100 % du polypropylène carbonate incorporé dans le mélange. Cela a conduit à une baisse de densité de l'électrode de 2,0 g/cm³ à 1,4 g/cm³ et à une porosité volumique de 50 %.

La composition 4 résultante, qui est issue d'un mélange fondu comprenant plus de 30 % en masse de phase sacrificielle et qui comprend 90 % en masse de matière active, peut être utilisable directement comme cathode. En effet, on l'a caractérisée en pile bouton contre Li métal. En fixant un courant équivalent à une vitesse de charge et décharge de C/5, on a obtenu une capacité maximum en décharge atteinte de 123 mAh par gramme de cathode (sans inclure la masse du collecteur), ce qui correspond à une capacité de 136 mAh par gramme de C-LiFePO₄.

### Exemple 5 selon l'invention :

On a préparé une composition 5 de cathode pour batterie lithium-ion selon les formulations suivantes (exprimées en fractions massiques et volumiques), pour le mélange avant extraction du polymère sacrificiel et pour la composition 5 obtenue après cette extraction.

**Tableau 5 :**

| | Avant extraction | | Après extraction | |
|---|---|---|---|---|
| **Composition 5** | % masse | % volume | % masse | % volume |
| Liant : Ethylène-Acrylate d'éthyle (Lotader 5500) | 3,4 | 7,7 | 5 | 15,8 |
| Charge conductrice : Noir de carbone (C-Nergie C65) | 3,4 | 3,8 | 5 | 7,7 |
| Polymère sacrificiel : Polypropylène carbonate (QPAC40) | 30,9 | 51,2 | 0 | 0 |
| Matière active: Li₄Ti₅O₁₂ (EXM 1979) | 62,3 | 37,3 | 90 | 76,5 |

On a préparé la composition 5 en utilisant une extrudeuse bi-vis équipée de trois doseurs gravimétriques, d'un gaveur latéral, d'une pompe à engrenage et d'une filière plate. On a réparti les différentes matières premières dans ces différents doseurs gravimétriques. Lors de l'extrusion, on a réglé les débits des doseurs de manière à obtenir la composition 5 voulue. En utilisant un profil de vis spécifique, on a dispersé et homogénéisé par voie fondue les matières premières dans l'extrudeuse bi-vis. La pompe à engrenage et la filière plate en bout d'extrudeuse ont servi à mettre en forme le mélange obtenu sous forme de film directement déposé sur un collecteur de courant. On a ensuite traité thermiquement le film ainsi obtenu à 230° C pendant 60 min. sous air, afin d'obtenir la composition 5 finale.

Lors du traitement thermique, on a mesuré par différence de masse l'élimination du polypropylène carbonate : on a ainsi décomposé 100 % du polypropylène carbonate incorporé dans le mélange. Cela a conduit à une baisse de densité de l'électrode de 2,1 g/cm³ à 1,4 g/cm³ et à une porosité volumique de 50 %.

La composition 5 résultante, qui est issue d'un mélange fondu comprenant plus de 30 % en masse de phase sacrificielle et qui comprend 90 % en masse de matière active, peut être utilisable directement comme cathode. En effet, on l'a caractérisée en pile bouton contre Li métal. En fixant un courant équivalent à une vitesse de charge et décharge de C/5, on a obtenu une capacité maximum en décharge atteinte de 135 mAh par gramme de cathode (sans inclure la masse du collecteur), ce qui correspond à une capacité de 150 mAh par gramme de Li₄Ti₅O₁₂.

### Exemple 6 selon l'invention :

On a préparé une composition 6 de cathode pour batterie lithium-ion selon les formulations suivantes (exprimées en fractions massiques et volumiques), pour le mélange avant extraction du polymère sacrificiel et pour la composition 6 obtenue après cette extraction.

**Tableau 6 :**

| | Avant extraction | | Après extraction | |
|---|---|---|---|---|
| **Composition 6** | % masse | % volume | % masse | % volume |
| Liant : HNBR (Zetpol 2010L) | 3,75 | 7,1 | 7,5 | 20,8 |
| Charge conductrice : Noir de carbone (C-Nergy C65) | 3,75 | 3,6 | 7,5 | 10,6 |
| Polymère sacrificiel : Polyéthylène carbonate (QPAC25) | 50 | 65,8 | 0 | 0 |
| Matière active: C-LiFePO₄ ("Life power P2") | 42,5 | 23,5 | 85 | 68,6 |

On a préparé la composition 6 en utilisant un mélangeur interne à 70° C. On a d'abord ajouté le HNBR et une partie du polyéthylène carbonate afin d'obtenir un mélange fondu plastifié. Ensuite, on a ajouté progressivement les charges minérales avec ajout régulier du polyéthylène carbonate restant, jusqu'à obtention d'un mélange homogène.

On a ensuite calandré le mélange obtenu sous forme de feuille afin de le comprimer sous presse à 170° C pendant 15 min. On a enfin mis en œuvre une étape de décomposition du polymère sacrificiel en étuve sous air à 240° C pendant 30 min. Lors du traitement thermique, on a mesuré par différence de masse l'élimination du polyéthylène carbonate : on a ainsi décomposé 100 % du polyéthylène carbonate initialement incorporé dans le mélange. Cela a conduit à une porosité volumique de 66 %.

La composition 6 résultante qui est issue d'un mélange fondu comprenant 50 % en masse de phase sacrificielle et qui comprend 85 % en masse de matière active, peut être utilisable directement comme cathode. En effet, on l'a caractérisée en pile bouton contre Li métal. En fixant un courant équivalent à une vitesse de charge et décharge de C/5, on a obtenu une capacité maximum en décharge atteinte de 109 mAh par gramme de cathode (sans inclure la masse du collecteur de courant), ce qui correspond à une capacité de 128 mAh par gramme de C-LiFePO₄.

On a par ailleurs compressé cette électrode après dégradation de la phase sacrificielle, le produit résultant ayant toujours la même formulation finale que la composition 6 et étant également utilisable directement comme cathode. On l'a caractérisée comme précédemment en pile bouton contre Li métal, en fixant un courant équivalent à une vitesse de charge et décharge de C/5, et l'on a obtenu une capacité maximum en décharge atteinte de 106 mAh par gramme de cathode (sans inclure la masse du collecteur), ce qui correspond à une capacité de 124 mAh par gramme de C-LiFePO₄.

On notera que le taux massique de phase sacrificielle très élevé (50 %) utilisé dans le mélange fondu permet avantageusement de rendre ce mélange très fluide et d'atteindre des épaisseurs d'électrodes très faibles (50 µm).

On notera également que la compression finale permet de réduire la porosité très élevée (66 %) de la composition 6, afin de disposer d'une densité d'énergie acceptable pour l'électrode.

### Exemple « témoin » non conforme à l'invention :

On a préparé une composition « témoin » de cathode pour batterie lithium-ion selon les formulations suivantes (exprimées en fractions massiques et volumiques), pour le mélange avant extraction du polymère sacrificiel et pour la composition « témoin » obtenue après cette extraction.

**Tableau 7 :**

| | Avant extraction | | Après extraction | |
|---|---|---|---|---|
| **Composition « témoin »** | % masse | % volume | % masse | % volume |
| Liant : HNBR (Zetpol 2010L) | 6,75 | 17,1 | 7,5 | 20,8 |
| Charge conductrice : Noir de carbone (C-Nergy C65) | 6,75 | 8,8 | 7,5 | 10,6 |
| Polymère sacrificiel : Polyéthylène carbonate (QPAC25) | 10 | 17,6 | 0 | 0 |
| Matière active: C-LiFePO₄ ("Life power P2") | 76,5 | 56,5 | 85 | 68,6 |

On a préparé la composition « témoin » en utilisant un mélangeur interne à 70° C. On a d'abord ajouté le HNBR et le polyéthylène carbonate afin d'obtenir un mélange fondu plastifié. Ensuite, on a ajouté progressivement une partie des charges minérales. On a dû ajouter le restant des charges minérales sur un mélangeur ouvert. En effet, l'ajout complet des charges dans le mélangeur interne entraîne un phénomène de grillage par abrasion.

On a ensuite calandré le mélange obtenu sous forme de feuille afin de le comprimer sous presse à 170° C pendant 15 min. En raison de la forte viscosité du mélange, on a seulement pu obtenir une épaisseur de 280 µm en comparaison des 50 µm à 150 µm obtenus en temps normal avec le procédé de l'invention.

On a enfin mis en œuvre une étape de décomposition du polymère sacrificiel en étuve sous air à 230° C pendant 20 min. Lors du traitement thermique, on a mesuré par différence de masse l'élimination du polyéthylène carbonate : on a ainsi décomposé 100 % du polyéthylène carbonate initialement incorporé dans le mélange. Cela a conduit à une porosité volumique de seulement 17,6 %.

On a caractérisé la composition « témoin » obtenue en pile bouton contre Li métal. En fixant un courant équivalent à une vitesse de charge et décharge de C/5, on a obtenu une capacité maximum en décharge atteinte de 26 mAh par gramme de cathode (sans inclure la masse du collecteur de courant), ce qui correspond à une capacité de 30 mAh par gramme de C-LiFePO₄.

On notera que cette composition « témoin », qui est issue d'un mélange fondu contenant seulement 10 % en masse de phase sacrificielle, contrairement aux quantités d'au moins 15 % requises dans les mélanges fondus de la présente invention, est très difficile à mettre en œuvre.

De plus, cette composition « témoin » très peu poreuse (porosité de moins de 20 % en volume) ne procure pas de résultats électrochimiques performants en raison de l'accès insuffisant de l'électrolyte à la matière active qui en résulte (voir la capacité maximum en décharge de seulement 26 mAh par gramme de cathode), en particulier contrairement à l'exemple 2 selon l'invention caractérisé par un même taux massique final de matière active (85 %) mais par l'incorporation d'un taux massique nettement supérieur de phase sacrificielle (plus de 30 %) qui procure une capacité maximum en décharge de 115 mAh par gramme de cathode.

## Revendications

1. Procédé de préparation d'une composition polymérique utilisable pour constituer une électrode de batterie lithium-ion, sodium-ion ou de supercondensateur ou pour présenter des propriétés magnétiques, le procédé comprenant les étapes suivantes :
a) mélangeage à chaud par voie fondue et sans solvant d'au moins une matière active, d'une phase polymérique formant liant et d'une phase polymérique sacrificielle pour l'obtention d'un mélange, et
b) élimination au moins partielle de ladite phase polymérique sacrificielle pour l'obtention de ladite composition qui comprend la ou les matière(s) active(s) selon une fraction massique supérieure à 80 %,
**caractérisé en ce que** ladite phase polymérique sacrificielle est utilisée à l'étape a) selon une fraction massique dans ledit mélange qui est égale ou supérieure à 15 %.

2. Procédé selon la revendication 1, **caractérisé en ce que** ladite phase polymérique sacrificielle est utilisée à l'étape a) selon une fraction massique dans ledit mélange inclusivement comprise entre 20 % et 80 %.

3. Procédé selon la revendication 1 ou 2, **caractérisé en ce que** ladite phase polymérique sacrificielle est utilisée à l'étape a) sous forme de granulés de taille moyenne en nombre supérieure à 1 mm, et **en ce que** l'étape a) est mise en œuvre dans un mélangeur interne ou dans une extrudeuse sans macroséparation de phases entre ladite phase polymérique formant liant et ladite phase polymérique sacrificielle dans ledit mélange, dans lequel ladite phase formant liant est dispersée de manière homogène dans ladite phase polymérique sacrificielle qui est continue, ou bien forme une phase co-continue avec cette dernière.

4. Procédé selon une des revendications 1 à 3, **caractérisé en ce que** ladite phase polymérique sacrificielle est éliminée à l'étape b) via une décomposition par voie thermique, ladite phase polymérique sacrificielle présentant une température de décomposition thermique inférieure d'au moins 20° C à une température de décomposition thermique de ladite phase formant liant.

5. Procédé selon la revendication 4, **caractérisé en ce que** ladite phase polymérique sacrificielle est à base d'au moins un polymère sacrificiel choisi parmi les polyalcènes carbonates, de préférence les polyéthylènes carbonates et/ou les polypropylènes carbonates.

6. Procédé selon une des revendications 1 à 3, **caractérisé en ce que** ladite phase polymérique sacrificielle est éliminée à l'étape b) via une extraction par un solvant et est à base d'au moins un polymère sacrificiel extractible par voie liquide et de préférence choisi dans le groupe constitué par les polyéthylène glycols, les polypropylène glycols et leurs mélanges.

7. Procédé selon une des revendications précédentes, **caractérisé en ce que** ladite phase formant liant comprend au moins un élastomère réticulé ou non, qui est utilisé dans ledit mélange selon une fraction massique comprise entre 1 % et 12 % et qui est de préférence choisi dans le groupe constitué par les copolymères de butadiène et d'acrylonitrile hydrogénés (HNBR), les copolymères d'éthylène et d'un acrylate, les polyisoprènes et leurs mélanges.

8. Procédé selon une des revendications précédentes, **caractérisé en ce que** ladite ou lesdites matière(s) active(s) est (sont) présente(s) dans ladite composition obtenue à l'étape b) selon une fraction massique de préférence égale ou supérieure à 85 %, et est choisie dans le groupe constitué par :
- les charges inorganiques magnétiques, telles que des ferrites,
- les charges inorganiques actives aptes à permettre une insertion/ désinsertion de lithium pour les électrodes de batteries lithium-ion, comprenant des composés ou complexes polyanioniques lithiés tels qu'un phosphate d'un métal M lithié de formule LiMPO₄ revêtu de carbone, un oxyde de titane lithié de formule Li₄Ti₅O₁₂, les oxydes de formule LiCoO₂, LiMnO₄, LiNi_{1/3}Mn_{1/3}Co_{1/3}O₄, ou du graphite, et
- les charges comprenant du carbone poreux pour les électrodes de supercondensateurs.

9. Procédé selon une des revendications précédentes, **caractérisé en ce que** ladite composition obtenue à l'étape b) présente une porosité volumique comprise entre 30 % et 70 % et est adaptée pour constituer une électrode de batterie lithium-ion, sodium-ion ou de supercondensateur.

10. Procédé selon une des revendications précédentes, **caractérisé en ce que** le procédé comprend entre les étapes a) et b) une étape de façonnage par calandrage dudit mélange obtenu à l'étape a), et **en ce que** ladite composition obtenue à l'étape b) est formée d'une feuille d'épaisseur comprise entre 50 µm et 150 µm.

11. Composition polymérique utilisable pour constituer une électrode de batterie lithium-ion, sodium-ion ou de supercondensateur ou pour présenter des propriétés magnétiques, **caractérisé en ce que** ladite composition est obtenue par un procédé selon une des revendications 1 à 10 et présente ladite phase polymérique sacrificielle selon une fraction massique égale ou supérieure à 0,001 % et par exemple comprise entre 0,01 % et 10 %, et **en ce que** ladite phase polymérique formant liant comprend au moins un élastomère réticulé ou non qui est utilisé dans ledit mélange selon une fraction massique comprise entre 1 % et 12 % et qui est choisi dans le groupe constitué par les copolymères de butadiène et d'acrylonitrile hydrogénés (HNBR), les copolymères d'éthylène et d'un acrylate et leurs mélanges.

12. Mélange polymérique utilisable pour constituer un précurseur de ladite composition selon la revendication 11, **caractérisé en ce que** ledit mélange est obtenu par l'étape a) du procédé selon une des revendications 1 à 10 et comprend ladite phase polymérique sacrificielle selon une fraction massique dans ledit mélange égale ou supérieure à 15 % et de préférence inclusivement comprise entre 20 % et 80 %.

13. Mélange selon la revendication 12, **caractérisé en ce que** ladite phase formant liant est dispersée de manière homogène dans ladite phase polymérique sacrificielle qui est continue, ou bien forme une phase co-continue avec cette dernière.

14. Electrode de batterie lithium-ion, sodium-ion ou de supercondensateur, **caractérisée en ce qu'**elle comprend une composition polymérique selon la revendication 11.

15. Electrode selon la revendication 14, **caractérisée en ce que** ladite composition comprend en outre une charge électriquement conductrice choisie dans le groupe constitué par le noir de carbone, le graphite, le graphite expansé, les fibres de carbones, les nanotubes de carbone, le graphène et leurs mélanges, ladite charge électriquement conductrice étant présente dans ladite composition selon une fraction massique comprise entre 1 % et 10 %.

## Patentansprüche

1. Verfahren zur Herstellung einer Polymerzusammensetzung, die dazu verwendet werden kann, eine Elektrode einer Lithium-Ionen-, Natrium-Ionen- oder Superkondensator-Batterie zu bilden oder magnetische Eigenschaften aufzuweisen, wobei das Verfahren die folgenden Schritte umfasst:
a) Schmelzmischen ohne Lösungsmittel von mindestens einem Wirkstoff, einer polymeren Bindemittelphase und einer Opferpolymerphase in der Wärme, um eine Mischung zu erhalten, und
b) zumindest teilweises Entfernen der Opferpolymerphase, um die Zusammensetzung zu erhalten, die den oder die Wirkstoffe in einem Massenanteil von mehr als 80 % umfasst,
**dadurch gekennzeichnet, dass** die Opferpolymerphase in Schritt a) mit einem Massenanteil in der Mischung verwendet wird, der gleich oder größer als 15 % ist.

2. Verfahren nach Anspruch 1, **dadurch gekennzeichnet, dass** die Opferpolymerphase in Schritt a) mit einem Massenanteil in der Mischung von einschließlich 20 % bis 80 % verwendet wird.

3. Verfahren nach Anspruch 1 oder 2, **dadurch gekennzeichnet, dass** die Opferpolymerphase in Schritt a) in Form von Granulat mit einer zahlenmittleren Größe von mehr als 1 mm verwendet wird und dass Schritt a) in einem Innenmischer oder in einem Extruder ohne Makroseparation der Phasen zwischen der polymeren Bindemittelphase und der Opferpolymerphase in der Mischung durchgeführt wird, wobei die Bindemittelphase in der Opferpolymerphase homogen dispergiert wird, die entweder kontinuierlich ist oder mit dieser eine co-kontinuierliche Phase bildet.

4. Verfahren nach einem der Ansprüche 1 bis 3, **dadurch gekennzeichnet, dass** die Opferpolymerphase in Schritt b) über eine thermische Zersetzung entfernt wird, wobei die Opferpolymerphase eine thermische Zersetzungstemperatur aufweist, die mindestens 20°C niedriger ist als eine thermische Zersetzungstemperatur der Bindemittelphase.

5. Verfahren nach Anspruch 4, **dadurch gekennzeichnet, dass** die Opferpolymerphase auf mindestens einem Opferpolymer basiert, das unter den Polyalkencarbonaten, vorzugsweise den Polyethylencarbonaten und/oder den Polypropylencarbonaten, ausgewählt ist.

6. Verfahren nach einem der Ansprüche 1 bis 3, **dadurch gekennzeichnet, dass** die Opferpolymerphase in Schritt b) über eine Lösungsmittelextraktion entfernt wird und auf mindestens einem flüssig extrahierbaren Opferpolymer basiert, das vorzugsweise aus der Gruppe ausgewählt ist, die aus Polyethylenglykolen, Polypropylenglykolen und deren Mischungen besteht.

7. Verfahren nach einem der vorhergehenden Ansprüche, **dadurch gekennzeichnet, dass** die Bindemittelphase mindestens ein vernetztes oder nicht vernetztes Elastomer umfasst, das in der Mischung in einem Massenanteil zwischen einschließlich 1 % und 12 % verwendet wird und vorzugsweise aus der Gruppe ausgewählt ist, die aus hydrierten Copolymeren von Butadien und Acrylnitril (HNBR), Copolymeren von Ethylen und einem Acrylat, Polyisoprenen und deren Mischungen besteht.

8. Verfahren nach einem der vorhergehenden Ansprüche, **dadurch gekennzeichnet, dass** der oder die Wirkstoffe in der in Schritt b) erhaltenen Zusammensetzung in einem Massenanteil von vorzugsweise 85 % oder mehr vorliegt/vorliegen und aus der Gruppe ausgewählt ist/sind, die besteht aus:
- magnetischen anorganischen Füllstoffen, wie Ferriten,
- aktiven anorganischen Füllstoffen, die geeignet sind, eine Insertion/Disinsertion von Lithium für die Elektroden von Lithium-Ionen-Batterien zu ermöglichen, die lithiumhaltige polyanionische Verbindungen oder Komplexe umfassen, wie ein mit Kohlenstoff beschichtetes lithiumhaltiges Phosphat eines Metalls der Formel LiMPO₄, ein lithiumhaltiges Titanoxid der Formel Li₄Ti₅O₁₂, die Oxide der Formel LiCoO₂, LiMnO₄, LiNi_{1/3}Mn_{1/3}Co_{1/3}O₄ oder Graphit, und
- Füllstoffen, die porösen Kohlenstoff für Superkondensator-Elektroden umfassen.

9. Verfahren nach einem der vorhergehenden Ansprüche, **dadurch gekennzeichnet, dass** die in Schritt b) erhaltene Zusammensetzung eine Volumenporosität zwischen 30 % und 70 % aufweist und geeignet ist, eine Elektrode für eine Lithium-Ionen-, Natrium-Ionen- oder Superkondensator-Batterie zu bilden.

10. Verfahren nach einem der vorhergehenden Ansprüche, **dadurch gekennzeichnet, dass** das Verfahren zwischen den Schritten a) und b) einen Schritt der Formgebung durch Kalandrieren der in Schritt a) erhaltenen Mischung umfasst, und dass die in Schritt b) erhaltene Zusammensetzung aus einer Folie mit einer Dicke zwischen 50 µm und 150 µm gebildet wird.

11. Polymere Zusammensetzung, die verwendet werden kann, um eine Elektrode einer Lithium-Ionen-, Natrium-Ionen- oder Superkondensator-Batterie zu bilden oder um magnetische Eigenschaften aufzuweisen, **dadurch gekennzeichnet, dass** die Zusammensetzung durch ein Verfahren nach einem der Ansprüche 1 bis 10 erhalten wird und die Opferpolymerphase in einem Massenanteil von gleich oder größer 0,001 % und beispielsweise zwischen 0,01 % und 10 % aufweist, und dass die polymere Bindemittelphase mindestens ein vernetztes oder nicht vernetztes Elastomer umfasst, das in der Mischung in einem Massenanteil zwischen einschließlich 1 % und 12 % verwendet wird, und das aus der Gruppe ausgewählt ist, die aus hydrierten Copolymeren von Butadien und Acrylnitril (HNBR), Copolymeren von Ethylen und einem Acrylat und deren Mischungen besteht.

12. Polymermischung, die als Vorläufer der Zusammensetzung nach Anspruch 11 verwendet werden kann, **dadurch gekennzeichnet, dass** die Mischung durch Schritt a) des Verfahrens nach einem der Ansprüche 1 bis 10 erhalten wird und die Opferpolymerphase in einem Massenanteil in der Mischung von 15 % oder mehr und vorzugsweise zwischen einschließlich 20 % und 80 % umfasst.

13. Mischung nach Anspruch 12, **dadurch gekennzeichnet, dass** die Bindemittelphase homogen in der Opferpolymerphase dispergiert ist, die kontinuierlich ist oder mit dieser eine co-kontinuierliche Phase bildet.

14. Elektrode für Lithium-Ionen-, Natrium-Ionen- oder Superkondensator-Batterien, **dadurch gekennzeichnet, dass** sie eine Polymerzusammensetzung nach Anspruch 11 umfasst.

15. Elektrode nach Anspruch 14, **dadurch gekennzeichnet, dass** die Zusammensetzung außerdem einen elektrisch leitfähigen Füllstoff umfasst, der aus der Gruppe ausgewählt ist, die aus Ruß, Graphit, expandiertem Graphit, Kohlenstofffasern, Kohlenstoffnanoröhren, Graphen und deren Mischungen besteht, wobei der elektrisch leitfähige Füllstoff in der Zusammensetzung in einem Massenanteil zwischen einschließlich 1 % und 10 % enthalten ist.

## Claims

1. A process for preparing a polymeric composition usable for forming a lithium-ion or sodium-ion battery electrode or a supercapacitor electrode or for exhibiting magnetic properties, the process comprising the following steps:
a) hot-mixing, by a melt process and without solvent, at least one active material, a binder-forming polymeric phase and a sacrificial polymeric phase to obtain a mixture, and
b) at least partially eliminating said sacrificial polymeric phase to obtain said composition which comprises the active material(s) according to a weight fraction greater than 80%,
**characterized in that** said sacrificial polymeric phase is used in step a) according to a weight fraction in said mixture which is greater than or equal to 15%.

2. The process as claimed in claim 1, **characterized in that** said sacrificial polymeric phase is used in step a) according to a weight fraction in said mixture which is inclusively between 20% and 80%.

3. The process as claimed in claim 1 or 2, **characterized in that** said sacrificial polymeric phase is used in step a) in the form of granules having a number-average size greater than 1 mm, and **in that** step a) is carried out in an internal mixer or in an extruder without macrophase separation between said binder-forming polymeric phase and said sacrificial polymeric phase in said mixture, in which said binder-forming phase is homogeneously dispersed in said sacrificial polymeric phase which is continuous, or else forms a co-continuous phase with the latter.

4. The process as claimed in one of claims 1 to 3, **characterized in that** said sacrificial polymeric phase is eliminated in step b) via a thermal decomposition, said sacrificial polymeric phase having a thermal decomposition temperature which is at least 20°C below a thermal decomposition temperature of said binder-forming phase.

5. The process as claimed in claim 4, **characterized in that** said sacrificial polymeric phase is based on at least one sacrificial polymer chosen from polyalkene carbonates, preferably polyethylene carbonates and/or polypropylene carbonates.

6. The process as claimed in one of claims 1 to 3, **characterized in that** said sacrificial polymeric phase is eliminated in step b) via an extraction with a solvent and is based on at least one liquid-extractable sacrificial polymer preferably chosen from the group consisting of polyethylene glycols, polypropylene glycols and mixtures thereof.

7. The process as claimed in one of the preceding claims, **characterized in that** said binder-forming phase comprises at least one crosslinked or noncrosslinked elastomer, which is used in said mixture according to a weight fraction of between 1% and 12% and which is preferably chosen from the group consisting of hydrogenated butadiene/acrylonitrile copolymers (HNBR), ethylene/acrylate copolymers, polyisoprenes and mixtures thereof.

8. The process as claimed in one of the preceding claims, **characterized in that** said active material(s) is (are) present in said composition obtained in step b) according to a weight fraction preferably greater than or equal to 85%, and is (are) chosen from the group consisting of:
- magnetic inorganic fillers, such as ferrites,
- active inorganic fillers capable of allowing lithium insertion/deinsertion for lithium-ion battery electrodes, comprising lithiated polyanionic compounds or complexes such as a lithiated metal M phosphate of formula LiMPO₄ coated with carbon, a lithiated titanium oxide of formula Li₄Ti₅O₁₂, oxides of formula LiCoO₂, LiMnO₄ or LiNi_{1/3}Mn_{1/3}Co_{1/3}O₄, or graphite, and
- fillers comprising porous carbon for supercapacitor electrodes.

9. The process as claimed in one of the preceding claims, **characterized in that** said composition obtained in step b) has a volume porosity between 30% and 70% and is suitable for forming a lithium-ion or sodium-ion battery electrode or a supercapacitor electrode.

10. The process as claimed in one of the preceding claims, **characterized in that** the process comprises, between steps a) and b), a step of fashioning by calendering said mixture obtained in step a), and **in that** said composition obtained in step b) is formed from a sheet having a thickness of between 50 µm and 150 µm.

11. A polymeric composition usable for forming a lithium-ion or sodium-ion battery electrode or a supercapacitor electrode or for exhibiting magnetic properties, **characterized in that** said composition is obtained by means of a process as claimed in one of claims 1 to 10 and exhibits said sacrificial polymeric phase according to a weight fraction greater than or equal to 0.001% and for example between 0.01% and 10%, and **in that** said binder-forming polymeric phase comprises at least one crosslinked or noncrosslinked elastomer which is used in said mixture according to a weight fraction of between 1% and 12% and which is chosen from the group consisting of hydrogenated butadiene/acrylonitrile copolymers (HNBR), ethylene/acrylate copolymers and mixtures thereof.

12. A polymeric mixture usable for forming a precursor of said composition as claimed in claim 11, **characterized in that** said mixture is obtained via step a) of the process as claimed in one of claims 1 to 10 and comprises said sacrificial polymeric phase according to a weight fraction in said mixture greater than or equal to 15% and preferably inclusively of between 20% and 80%.

13. The mixture as claimed in claim 12, **characterized in that** said binder-forming phase is homogeneously dispersed in said sacrificial polymeric phase which is continuous, or else forms a co-continuous phase with the latter.

14. A lithium-ion or sodium-ion battery electrode or supercapacitor electrode, **characterized in that** it comprises a polymeric composition as claimed in claim 11.

15. The electrode as claimed in claim 14, **characterized in that** said composition also comprises an electrically conducting filler chosen from the group consisting of carbon black, graphite, expanded graphite, carbon fibers, carbon nanotubes, graphene and mixtures thereof, said electrically conducting filler being present in said composition according to a weight.
